# EUROPEAN PATENT APPLICATION

(11) **EP 4 480 874 A1**
(43) Date of publication of application: **25.12.2024**
(21) Application number: 23181206.6
(22) Date of filing: 23.06.2023
(51) Int. Cl.: B65H 23/18

(54) **COMPUTER IMPLEMENTED METHOD FOR CONTROLLING A WINDING MACHINE AND FOR TRAINING A MACHINE LEARNING ALGORITHM, COMPUTER PROGRAM AND WINDING MACHINE**

(71) Applicant: Siemens Aktiengesellschaft, 80333 München (DE)
(72) Inventor: Athanasiou, Georgia, 90491 Nürnberg (DE); Lavrik, Vladimir, 63303 Dreieich (DE); Kerling, Sebastian, 91052 Erlangen (DE); Krauter, Uwe, 91056 Erlangen (DE)
(74) Representative: Siemens Patent Attorneys

(57) **Abstract**

The invention relates to a computer implemented method for controlling a winding machine (w), the winding machine comprising at least a winder (w) and a rewinder (r), comprising the steps of determining an actual velocity of the winder (w) during operation of the winding machine, performing a signal processing of the determined actual velocity (va) in order to extract a winder-related feature (fw), comprising subtracting a command velocity (vc, vc') from the determined actual velocity (va), determining an envelope signal of the subtracted signal (dv), and filtering the envelope signal, wherein the filtering preserves an amplitude-related information, using the filtered envelope signal as winder-related feature (fw) and as input for a trained machine learning algorithm, and running the machine learning algorithm based on the winder-related feature and giving an anomaly indicator as output.

## Description

The invention relates to a computer implemented method for controlling a winding machine, a computer implemented method for training a machine learning algorithm, a corresponding computer program and a winding machine.

Winding machines are installed in various applications relating to the paper, textile, or battery industry. A winding machine enables a web of different types of materials to be winded up around a target object. It is of utmost importance to make sure the web is winded up tightly to guarantee a high quality of the winded component. For that purpose, complex control schemes had been developed for winding machines.

A wide variety of parameters, such as friction or temperature, influence the web velocity which is compensated by the winding machine control mechanism. However, anomalies of low amplitude may appear in the web tension and oftentimes - depending on the type of material of a web as well as the amplitude of a web tension variation - either are detected at product quality inspection process or remain undetected. The product quality in both cases is affected and either the defect is detected late in the process so that a product has to be sorted out or not detected at all, which can even cause safety issues.

Highly automated winding machines along with control schemes are known to assure that a web is tightly winded up around the object. For controlling the winding quality different means of manual inspection have been employed. A visual inspection is known and in cases where the amplitude of an anomaly in the applied web tension is quite high it can be inspected through visual inspection by experienced operators. Apart from an anomality amplitude the success of such a method is also a matter of the material winded up. It is for example quite straightforward for an experienced operator to determine whether paper is winded up tightly, while it requires additional effort when the web material is coil or wire. The same is the case when the anomaly occurs in lower layers of the winded web and additional layers are winded before the visual inspection takes place.

Moreover, a manual analysis of a spectrogram is known for manual inspection: An operator monitors a spectrogram produced analyzing a signal from a rewinder in an online mode. The interpretation of calculated spectrograms again requires a lot of experience in case it is performed manually. A spectrogram produced by short time Fourier transform of a signal acquired from a dancer. For example, spectrograms produced by short time Fourier transformation of a signal acquired from a dancer, e.g. a dancer deviation from a setpoint, are used and have to be interpreted. The advantage of such a method is that the quality control is performed online and the winding process can be stopped by an operator if additional frequencies are presented on a spectrogram and therefore an abnormality is presumed.

Considering the described drawbacks in the state-of-the-art, it is therefore an objective of this disclosure to provide a computer implemented method for controlling a winding machine and for training a machine learning algorithm with an automated anomaly detection, a corresponding computer program and a corresponding winding machine.

These objectives are addressed by the subject matter of the independent claims. Advantageous embodiments are proposed in the dependent claims.

The invention relates to a computer implemented method for controlling a winding machine, the winding machine comprising at least a winder and a rewinder, comprising the steps of determining an actual velocity of the winder during operation of the winding machine, performing a signal processing of the determined actual velocity in order to extract a winder-related feature, comprising subtracting a command velocity from the determined actual velocity, determining an envelope signal of the subtracted signal, and filtering the envelope signal, wherein the filtering preserves an amplitude-related information, using the filtered envelope signal as winder-related feature and as input for a trained machine learning algorithm, and running the machine learning algorithm based on the winder-related feature and giving an anomaly indicator as output.

A winding machine can be used for any kind of material to be winded up or any web, for example paper, foil, textile web or similar. Moreover, the target object, on which the web is winded up, can be of round, prismatic, triangular or rectangular shape. For all these specialized winding machines, it is essential to guarantee a constant web tension as far as possible. As soon as a web tension is not in a specified given range depending on the concrete apparatus and configuration, the web is winded up irregularly and the winded product is of poor quality.

Therefore, different kind of compensation mechanisms are known for winding machines to allow a control of the web tension. Also, different kind of components are commonly used to introduce changes into the system or to amend parameters accordingly, like in specific dancers or web accumulators or load cells.

It is proposed to analyze the signal of the actual velocity of the winder, whereas the winder is the component from which the web is provided for the rewinder coil, by means of a machine learning algorithm. The signal of the actual velocity of the winder processed in the right manner, is rich of information for differentiating between healthy and unhealthy winding states. The machine learning approach for analyzing the winder signal works in either a supervised or an unsupervised setting and either live, i.e. during operation of the winding machine and during the winding process, or post-mortem.

The design of an anomaly detection method is based on selecting signals of rich information content that can indicate whether an anomaly takes place at the given time period being under investigation or not. This is achieved by the utilization of the following signals: the signal of the actual velocity of the winder and of a command velocity.

A process of features extraction takes place, which includes the steps of signal processing. In that way signals are transformed and features are extracted, which include information that can be correlated with an emergence of an anomaly. Especially the actual and command velocity of the winder are processed together for the sake of feature extraction, as follows: A positive and/or negative offset of the signal is removed if applicable. The signal of the winder command velocity is subtracted from that of the actual velocity. The resulting signal is utilized in order to determine a corresponding envelope signal. The envelope signal is filtered in a way that an information concerning the amplitude of the envelope signal is preserved. For example, a low-pass filtering of short transition phase is used such as butterworth, chebychev, Bessel of high order, preferably 3rd order and higher, depending on the noise of the signal. By using a suitable filtering method, any disturbances or spikes or noise is filtered out, preserving at the same time any amplitude related information of the signal.

The processed signal is utilized as winder-related feature and input into an unsupervised or supervised machine learning algorithm. An unsupervised machine learning algorithm indicates that an anomaly is emerged. A supervised machine learning algorithm indicates whether the under-investigation process at a given time window is of low or high quality.

In an advantageous manner, an ML-based scheme is provided that enables to detect anomalies of a web tension by measuring and analyzing winding machine process parameters without the need of an additional sensor.

In an advantageous manner, there is no skilled person necessary that has to perform an inspection of the winded up material manual and in a postmortem manner. This also reduces unnecessary waste of a material or rework efforts.

Furthermore, the described approach compared to well-known semi-automated analysis based on spectrogram calculations requires no experience-based interpretation process.

The fully automated proposed solution is useful for the whole range of materials and operational conditions for online quality control of a winding process. This also qualifies the method for usage in mass-production with post-mortem-quality assurance across all produced units in a certain area.

According to an embodiment, the method further comprises the step of initiating an amendment of one or more control parameters of the winding machine in case of an indicated anomaly. With the machine learning algorithm detecting anomalies, parameters of the winding machine, for example a dancer, can be adjusted in order to keep the quality of a product as high as possible.

With the machine learning algorithm in place, an anomaly detector is realized that outputs certain anomaly scores, which are translated into parameters of the control system in order to reset reference values of certain components of the winding machine, for example the winder or the dancer, in order to keep a quality of a product acceptable.

With the feedback of the output of the machine learning algorithm back to the control system, the winding process is improved as the web tension is kept more stable.

According to an embodiment, the winding machine further comprises a web accumulator, and a web-accumulator-related feature is extracted from the web accumulator actual position and is used as additional input for the trained machine learning algorithm and the machine learning algorithm is run based on the winder-related feature and the web-accumulator-related feature.

In an advantageous manner, in winding machines, where a web-accumulator is used, also signals and features relating to the web-accumulator are used to extract more or better information or information at an earlier point in time regarding an anomaly in the winding process. Using the processed signal of the actual position of the web-accumulator in addition to the processed signal of the difference of actual and command velocity makes the machine learning algorithm more robust.

A web accumulator is a system based on linear motor which operation aims on calibrating disturbance behavior on web tension in a controlled way. However, in cases where the emerged anomalies are quite unexpected, difficult to be captured by reference signals or of short duration, web accumulator operation is rather than effective. In such cases anomalies are expressed on web accumulator position which diverts from a balancing point due to high speed or torque of anomalous behaved web. Thus, the information content inheriting such a position signal is quite rich.

According to an embodiment, the web-accumulator-related feature is built based on a peak-to-peak value of the web accumulator actual position within a specified time window.

The feature of peak-to-peak of the web accumulator actual position in a specified, e.g. user defined, time window is used and further processed by means of statistical filtering. For example, statistical-based filtering methods like median, e.g. as median filter of a window size of preferably five, is used. The utilization of statistically filtered peak-to-peak feature not only shows diversion on amplitude, i.e. diverting behavior, but also fluctuations related to short-term variations. This permits to capture short amplitude fluctuation as well as to detect time-evolving amplitude anomalies.

According to an embodiment, the time window is specified by a period of the signal of the web-accumulator actual position. The period and therefore the time window is for example known for a specific winding machine setup and defined by an operator after an initial setup phase. Alternatively, the time window is determined by the system automatically based on an identified period.

According to an embodiment, the winding machine further comprises a dancer, and a dancer-related feature is extracted from the dancer actual position and is used as additional input for the trained machine learning algorithm and the machine learning algorithm is run based on the winder-related feature and the dancer-related feature or the winder-related feature, the web-accumulator-related feature and the dancer-related feature.

In a winding machine setup, where a dancer is used, also a feature extraction from a dancer-related signal is performed and used in addition to the winder-related feature extraction to make the machine learning algorithm more robust. If a web accumulator as well as a dancer are in place, then even feature extraction from all three signals, winder, web accumulator and dancer, can be used to feed the machine learning algorithm.

According to an embodiment, the dancer-related feature is built based on a waveform shape of the dancer actual position, in particular based on the crest factor of signal of the dancer related actual position, within a specified time window. Structural alterations of the waveform shape can be exploited to gain information regarding the dancer health status and therefrom draw conclusions about the overall systems health status.

According to an embodiment, the machine learning algorithm has been trained based on a supervised training method. Suitable supervised learning techniques for anomalies detection are k-nearest neighbors algorithms (KNN) with e.g. k=5 or k=7, or methods based on logistic regression and decision tree, in particular of non-random partition.

According to an embodiment, the machine learning algorithm has been trained based on an unsupervised training method. For unsupervised training methods, the extracted features are introduced without additional information and clusters are created by the algorithm, for example using a k-means approach. For example, k-means algorithms with k=2 or k=3 or fuzzy-c-means algorithms are used.

The invention moreover relates to a computer implemented method for training a machine learning algorithm, wherein the machine learning algorithm gives an anomaly indicator as output for controlling a winding machine and initiates an amendment of one or more control parameters of the winding machine in case of an indicated anomaly, wherein the winding machine comprises at least a winder and a rewinder, comprising the steps of determining an actual velocity of the winder during operation of the winding machine, performing a signal processing of the determined actual velocity in order to extract a winder-related feature, comprising subtracting a command velocity from the determined actual velocity, determining an envelope signal of the subtracted signal, and filtering the envelope signal, wherein the filtering preserves an amplitude-related information, using the filtered envelope signal as winder-related feature, and training the machine learning algorithm based on the winder-related feature.

According to an embodiment, an unsupervised training method is used to identify clusters and determine an anomaly degree for input data based on a corresponding cluster.

According to an embodiment, a supervised training method is used to identify classes based on labeled training data sets and determine an anomaly degree for input data based on a corresponding class.

In case of a supervised learning approach it must be estimated whether web tension during operation is healthy or exceeds the threshold of normal behavior. This can be achieved if the web tension is measured and can be classified in healthy and anomalous operation states. Those states associated with the training data sets are used as label in the training phase of the machine learning algorithm.

According to an embodiment, the winding machine in a training phase comprises a web tension sensor, wherein labeled data is generated depending on values of the web tension sensor.

Within the context of the given investigation, a sensor has been introduced into winding machine that measures the web tension in real time. After signal processing the amplitude of web tension constitutes an information that can be effectively utilized as labelling corresponding training data sets.

The invention furthermore relates to a computer program having instructions which when executed by a computing device or system cause the computing device or system to perform the method according to any one of the embodiments of the method described above.

The invention furthermore relates to a winding machine with a data-processing system comprising means for performing the method according to any one of the embodiments of the method described above. The data-processing system for example is integrated into a controller for controlling the winding machine. The controller in particular controls the axes or corresponding the drives of the different rolls depending on the implementation of the winding machine.

In the following different aspects of the present invention are described in more detail with reference to the accompanying figures.
- Fig. 1: shows a schematic diagram of winder-related curves of actual and command velocity according to a first embodiment of the present invention,
- Fig. 2: shows a schematic diagram of processed winderrelated curves offset-corrected according to the first embodiment of the present invention,
- Fig. 3: shows a schematic diagram of further processed winder-related curves of winder command velocity subtracted by winder actual velocity according to the first embodiment of the present invention,
- Fig. 4: shows a schematic diagram of the filtered envelope signal extracted as winder-related feature according to the first embodiment of the present invention,
- Fig. 5: shows a schematic diagram of the distribution of amplitudes of the actual velocity of the winder in healthy and different unhealthy operations according to the first embodiment of the present invention,
- Fig. 6: shows a schematic drawing of a winding machine according to a second embodiment of the present invention,
- Fig. 7: shows a schematic diagram of different signal-processed web accumulator-related curves according to the second embodiment of the present invention,
- Fig. 8: shows schematic box plots of a web-accumulator-related feature according to the second embodiment of the present invention,
- Fig. 9: shows a schematic drawing of a control mechanism for a winding machine according to a third embodiment of the present invention,
- Fig. 10: shows a schematic diagram of dancer-related curves according to a fourth embodiment of the present invention,
- Fig. 11: shows a zoom-in of the curve shown in Fig. 10 at a first time window during a healthy operation,
- Fig. 12: shows a zoom-in of the curve shown in Fig. 10 at a second time window during an unhealthy operation,
- Fig. 13: shows a zoom-in of the curve shown in Fig. 10 at a third time window during a further unhealthy operation.

For a first embodiment of the invention, a winding machine is equipped with a machine learning algorithm that evaluates if a winding process winding up a web, e.g. a coil for a battery cell, from a winder, e.g. a round object, to a rewinder, e.g. a rectangular target object, is performed without disturbances that would lead to a bad quality of the battery cell. It is in particular very important to guarantee that a regular web tension is applied to the web during coiling to make sure that there are no irregularities in the product, that might lead to damage of the battery. The machine learning algorithm analyzes the winding process based on winder-related features, that are extracted from the winding process parameters without additional sensors. As an output, the machine learning algorithm gives an indication, whether the winding process is in a healthy condition or whether there are indicators for an unhealthy condition.

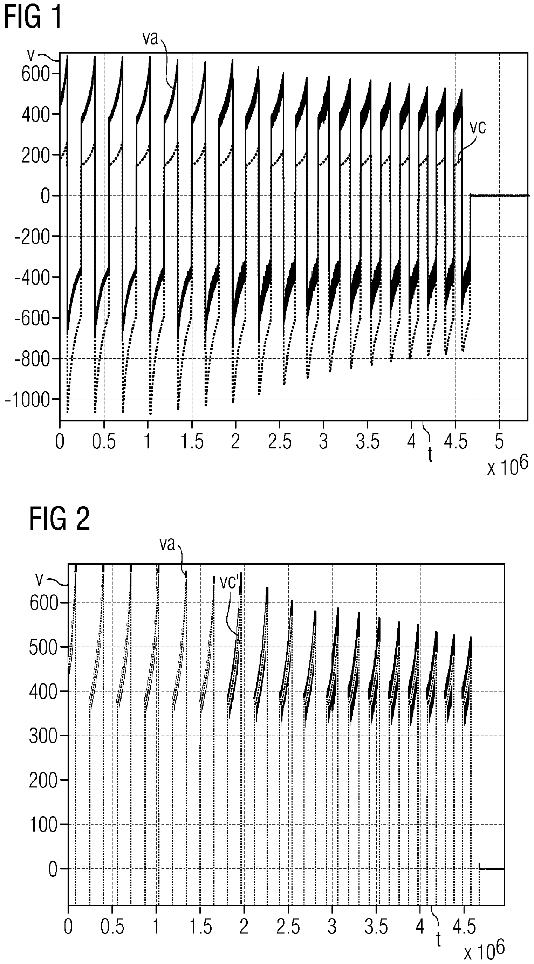

Figure 1 shows two speed signals v, the signal of the actual velocity of the winder va in mm/ms plotted over the time in ms. Only the parts of a repetitive forward movement of the winder are shown, the velocity of the movement in the timespan in between has been blanked for the sake of clarity.

In addition, the command velocity vc is shown in the same units.

In the diagram shown in figure 2, some signal processing has been performed and the command velocity vc of figure 1 now has been corrected by an offset to turn into an offset-corrected command velocity vc' plotted over time. The same signal of the actual velocity va of the winder than in figure 1 is also plotted in figure 2 for comparison.

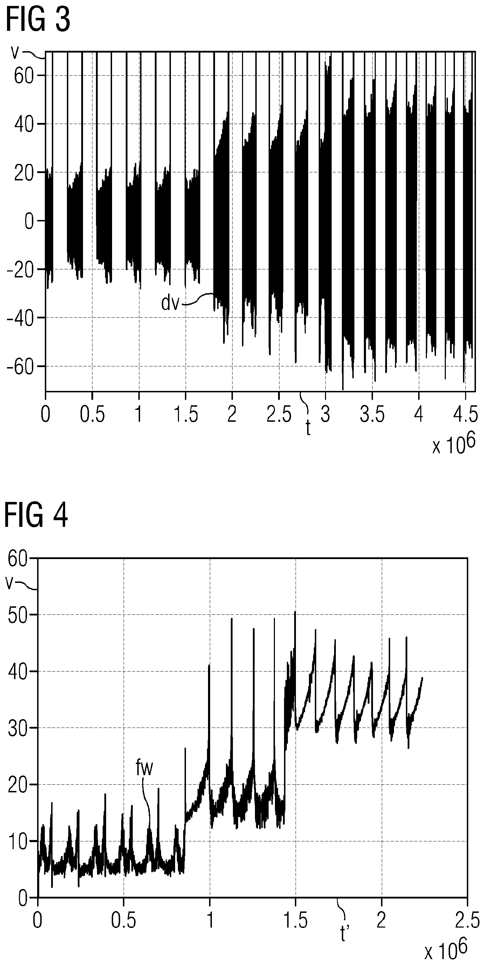

In a next step, the actual velocity va is subtracted from the offset-corrected command velocity vc' and the subtracted signal dv is shown in figure 3 and plotted again over time in the same units as in the figures before.

As next step, an envelope signal is determined that envelopes the subtracted signal dv. This envelope signal is furthermore filtered with a filtering algorithm that preserves the amplitude information and eliminates noise. A Butterworth algorithm of 3rd order has been applied in the first embodiment. The filtered envelope signal is used as winder-related feature fw that is extracted from process parameters of the winding process and is shown in figure 4.

The winder-related feature fw is feed into the machine learning algorithm. As an output the machine learning algorithm according to the first embodiments gives an indicator, whether the winding process in a given time window has been performed under normal conditions, so that no unhealthy status of the winding machine is expected, or whether there are hints that a type of disturbance occurred. In supervised machine learning algorithms, different degrees or types of disturbance, e.g. belonging to different sources for irregularities in the web tension, can be trained with respectively labeled training data sets.

Figure 4 shows the filtered envelope signal fw in three different states of operation, a healthy state in the time period from 0 - 0,8 x10⁶ ms, a state with a first introduced disturbance from 0,8 - 1,45 x10⁶ ms and a state with a second introduced disturbance from 1,45 - 2,25 x10⁶ ms. The second disturbance in this embodiment was an additional disturbance that occurred after the first disturbance already had occurred or a disturbance posed on the already existing one.

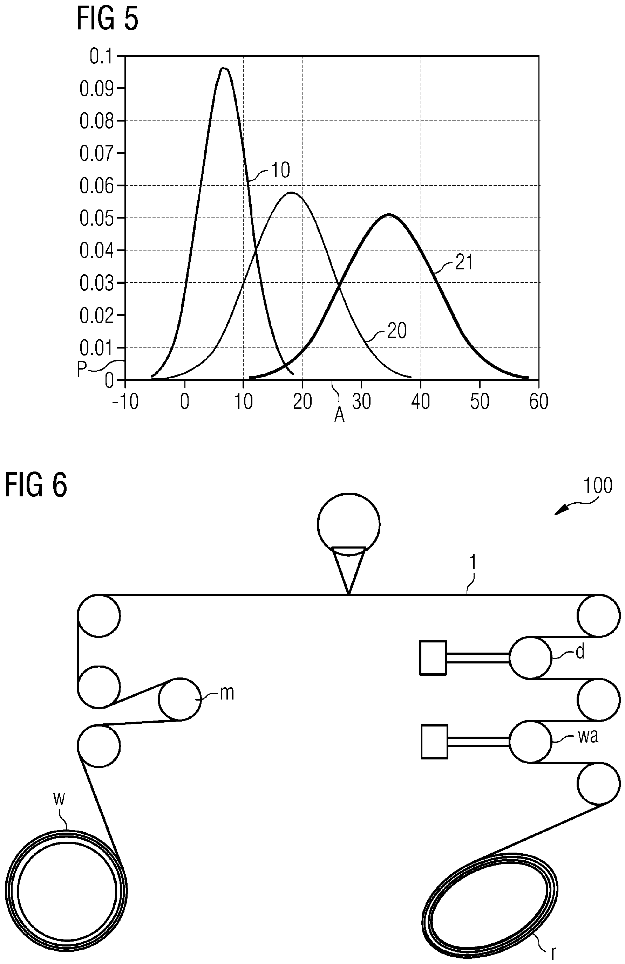

Figure 5 illustrates the distribution of amplitudes of the actual velocity va of the winder being relatively sharp centered around a specific amplitude for a healthy state 10 and being more smeared for unhealthy states 20, 21.

In a second embodiment, a winding process is assisted by a machine learning algorithm that not only takes into account a winder-related feature fw, but also a feature extracted from a web-accumulator. Figure 6 shows a typical structure of a winding machine with winder w and a rewinder r.

A winding machine is a fully automated system enabling a web 1 of material, e.g. a textile web according to the second embodiment of the invention, to be winded around a target object. As shown in Figure 6 this is achieved by a system of freely or controlled rotors. Especially, the winder w is provided as starting point where the web is stored which is about to be winded up. On the opposite site, the rewinder r is provided for receiving the web as the target object. The target object in this embodiment is of prismatic shape.

Both winder w and rewinder r are moving in a controlled way in order to wind up the web tightly. For that purpose, two linear motors are deployed driving a dancer d and a web accumulator wa enabling web speed, torque and position to be calibrated in accordance with a provided control scheme. In such a control system the mechanical system of master axis m is utilized to provide reference information regarding the web position and speed.

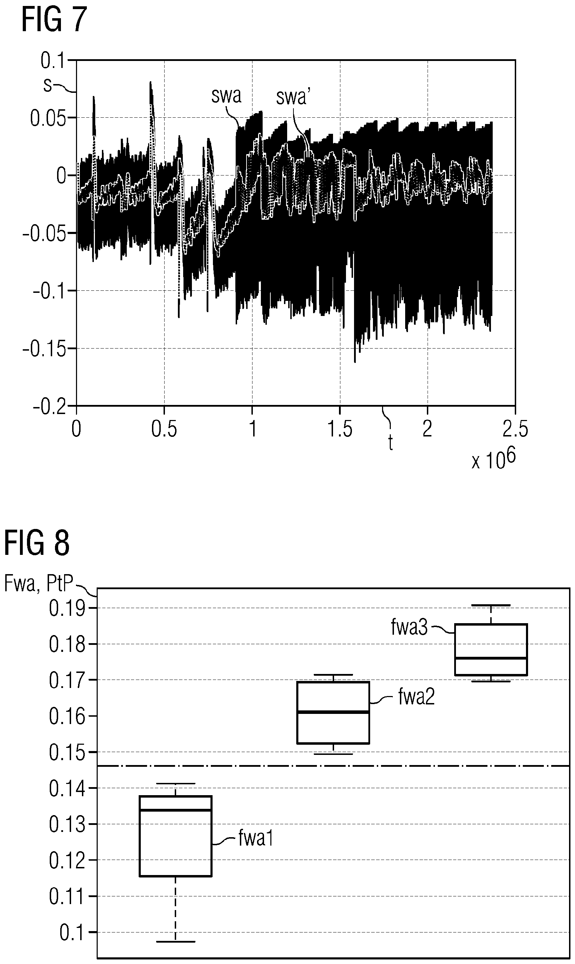

To utilize a web-accumulator-related feature as input for the machine learning algorithm, the signal of the actual position of the web-accumulator is analyzed. Figure 7 shows the signal swa of the web-accumulator actual position s plotted over the time t. The web-accumulator actual position signal swa is filtered to eliminate noise etc. The resulting filtered signal swa' is processed in order to extract a peak-to-peak value PtP of the signal in a specified time window.

In figure 8, box plots of different peak-to-peak values PtP of the filtered web-accumulator actual position signal are shown. A first peak-two-peak value 10 is derived for the web-accumulator actual position signal swa during a time span in which the winding process is performed under normal or healthy conditions. Within that time span of normal conditions, the peak-to-peak value PtP is derived from the signal within a specified time window. The suitable time window to choose is dependent from the actual web-accumulator position signals swa period, wherein a period is formed by the compensation movement of the web-accumulator for compensating irregularities in the web tension. A second and third peak-two-peak value 20, 21 is derived for the web-accumulator actual position signal swa during different time spans in which the winding process is performed under unnormal or unhealthy conditions.

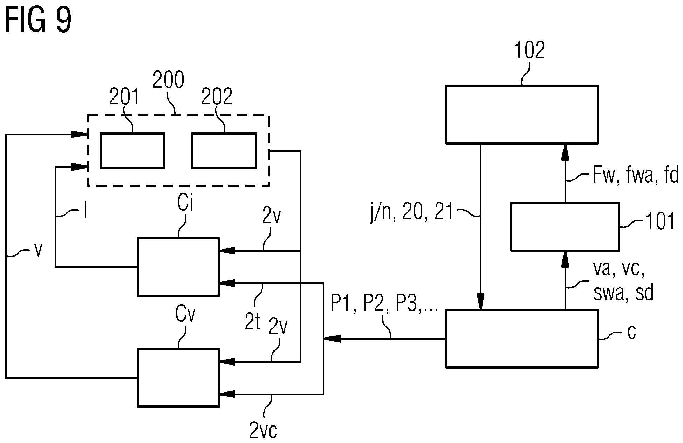

Figure 9 gives a scheme for a control mechanism underlying a winding machine or used in a winding process. An anomaly detector 102 is provided which works based on the extracted features fw, fwa, fd which are described above or in the following and which are extracted by a feature analyzer 101 based on the various process parameters derivable from the winding machine process control system. As output, the anomaly detector gives an anomaly indicator j/n indicating whether the winding process is performed under normal or unnormal conditions. Together with the anomaly indicator j/n, preferably additional information is provided to the control system C of the winding machine, which has been derived in a training phase of the machine learning algorithm and which allow a translation into parameters of the control system. For example, anomaly scores or anomaly degrees 20, 21 are derivable for which suitable reference values of control parameters P1, P2, P3,... of the winding control system have been derived in the training phase.

In an advantageous manner, the control mechanism is enriched by information about how to best adapt control parameters in case of a specific unhealthy state of the winding machine. For example, the drive system 200 of the rewinder comprising a rewinder motor 201 and a load 202 gives values of the actual speed 2v to a current controller Ci and a speed controller Cv and with an additional torque value 2t and a speed setpoint value 2vc, both influenced by the reference values of control parameters, P1, P2, P3,... the current controller Ci and the speed controller Cv are able to provide current I and speed V as correcting variables to the drive system 200.

The anomaly detector for example is implemented on an Industrial Edge system or an industry PC with connection to a web application for training purposes.

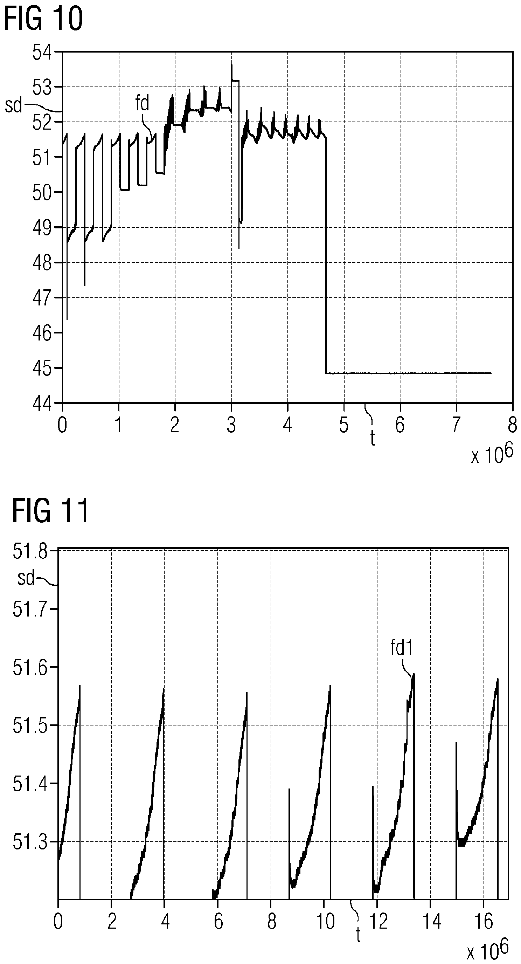

Figure 10 illustrates a feature extraction in a winding process according to a fourth embodiment of the invention. Here, not only input parameters of a winder of a winding machine are used for the purpose of anomaly detection, but also a dancer and the behavior of the dancer during coiling are examined. Therefore, the signal of the dancer actual position sd is determined and logged over the time t.

As can be seen from figure 10, the waveform shape fd of the signal of the dancer actual position sd has three different characteristic forms. The details of the first waveform shape fd1 is shown in more detail in figure 11 and zooms into the respective signal in figure 10. Each rising edge belongs to an up-winding process in a winding program with repetitive up- and unwinding (only up-winding or forward movement is shown).

The signal of the dancer actual position with the waveform shape fd1 indicates a normal behavior. As long as the machine learning algorithm gets such a waveform shape fd1 as input, no disturbance or anomaly is indicated.

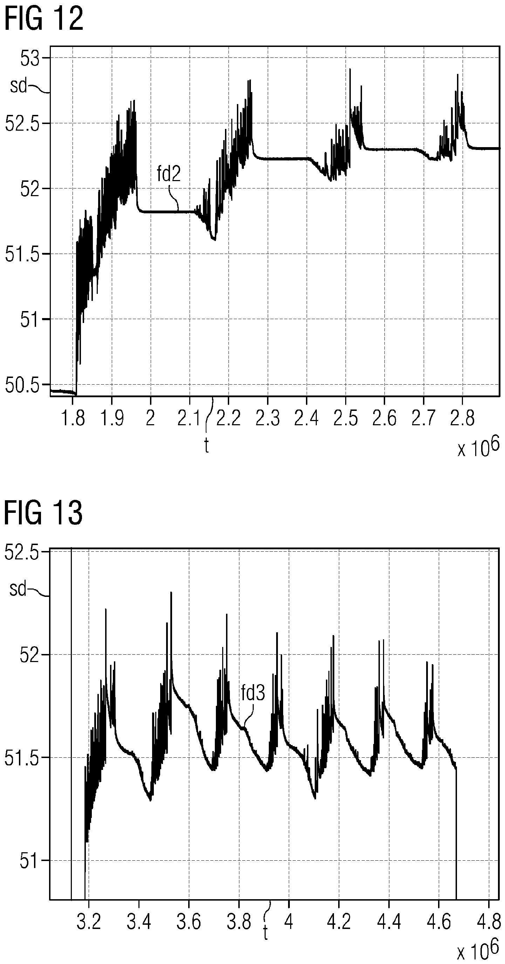

Figure 12 the waveform shape fd2 is shown in more detail. The waveform shape fd2 varies widely from the waveform shape fd1, which makes the signal in particular valuable for the machine learning algorithm. The machine learning algorithm works in particular well with several extracted features as input, e.g. a winder-related feature, a dancer-related feature, and optional in addition a web-accumulator related feature. Considering those different extracted features turns the machine-learning algorithm in a more robust system, and allows a reliably anomaly detections also in cases, where one of the components delivers erroneous or misleading values, which for example differ too much from the values generated and collected during the training phase as training data.

For further illustration, figure 13 shows the waveform shape fd3 in more details. The waveform shape fd3 again is of clearly different form as the waveform shapes fd1 and fd2. It is for example caused by a different kind of disturbance and indicates a specific kind of anomaly, expressed for example via a different anomaly score or anomaly degree 21 than the anomaly degree 20 in case of the waveform shape fd2. For example, an anomaly score is expressed via a percentage information.

In advantageous embodiments, each anomaly score is related to a set of parameters, which is given as feedback to the control mechanism for adjustment of the controller. For example, a winder velocity or a force or counterforce of the dancer is adjusted in accordance with the reference values from the design phase or training phase.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

## Claims

1. Computer implemented method for controlling a winding machine (100), the winding machine comprising at least a winder (w) and a rewinder (r), comprising the steps of:
- determining an actual velocity (va) of the winder (w) during operation of the winding machine (100),
- performing a signal processing of the determined actual velocity (va) in order to extract a winder-related feature (fw), comprising subtracting a command velocity (vc, vc') of the winder from the determined actual velocity (va), determining an envelope signal of the subtracted signal (dv), and filtering the envelope signal, wherein the filtering preserves an amplitude-related information,
- using the filtered envelope signal as winder-related feature (fw) and as input for a trained machine learning algorithm, and
- running the machine learning algorithm based on the winder-related feature (fw) and giving an anomaly indicator (j/n) as output.

2. Method according to claim 1, further comprising the step of initiating an amendment of one or more control parameters (P1, P2, P3, ...) of the winding machine (100) in case of an indicated anomaly.

3. Method according to claim 1 or 2, wherein the winding machine (100) further comprises a web accumulator (wa), and a web-accumulator-related feature (fwa) is extracted from the web accumulator actual position (swa) and is used as additional input for the trained machine learning algorithm and the machine learning algorithm is run based on the winder-related feature (fw) and the web-accumulator-related feature (fwa) .

4. Method according to claim 3, wherein the web-accumulator-related feature (fwa) is built based on a peak-to-peak (PtP) value of the web accumulator actual position (swa) within a specified time window.

5. Method according to claim 4, wherein the time window is specified by a period of the signal of the web-accumulator actual position (swa).

6. Method according to claim 5, wherein the winding machine (100) further comprises a dancer (d), and a dancer-related feature (fd) is extracted from the dancer actual position (sd) and is used as additional input for the trained machine learning algorithm and the machine learning algorithm is run based on the winder-related feature (fw) and the dancer-related feature (fd) or based on the winder-related feature (fw), the web-accumulator-related feature (fwa) and the dancer-related feature (fd).

7. Method according to claim 6, wherein the dancer-related feature (fd) is built based on a waveform shape (fd1, fd2, fd3) of the dancer actual position (sd), in particular based on the crest factor of the signal of the dancer related actual position (sd) within a specified time window.

8. Method according to one of the preceding claims, wherein the machine learning algorithm has been trained based on a supervised training method.

9. Method according to one of the preceding claims, wherein the machine learning algorithm has been trained based on an unsupervised training method.

10. Computer implemented method for training a machine learning algorithm, wherein the machine learning algorithm gives an anomaly indicator as output for controlling a winding machine (100) and initiates an amendment of one or more control parameters (P1, P2, P3, ...) of the winding machine (100) in case of an indicated anomaly, wherein the winding machine (100) comprises at least a winder (w) and a rewinder (r), comprising the steps of:
- determining an actual velocity (va) of the winder (w) during operation of the winding machine (100),
- performing a signal processing of the determined actual velocity (vs) in order to extract a winder-related feature (fw), comprising subtracting a command velocity (vc, vc') from the determined actual velocity (va), determining an envelope signal of the subtracted signal (dv), and filtering the envelope signal, wherein the filtering preserves an amplitude-related information,
- using the filtered envelope signal as winder-related feature (fw), and
- training the machine learning algorithm based on the winder-related feature (fw).

11. Method according to claim 10, wherein an unsupervised training method is used to identify clusters and determine an anomaly degree (20, 21) for input data based on a corresponding cluster.

12. Method according to claim 10, wherein a supervised training method is used to identify classes based on labeled training data sets and determine an anomaly degree (20, 21) for input data based on a corresponding class.

13. Method according to claim 12, wherein the winding machine (100) in a training phase comprises a web tension sensor, wherein labeled data is generated depending on values of the web tension sensor.

14. Computer program having instructions which when executed by a computing device or system cause the computing device or system to perform the method according to any one of claims 1 to 13.

15. A winding machine (100) with a data-processing system comprising means for performing the method according to any one of claims 1 to 13.
